# EUROPÄISCHE PATENTSCHRIFT

(11) **EP 2 816 018 B1**
(45) Veröffentlichungstag und Bekanntmachung des Hinweises auf die Patenterteilung: **06.03.2019**
(21) Anmeldenummer: 14160726.7
(22) Anmeldetag: 19.03.2014
(51) Int. Cl.: C03C 3/068, C03C 3/095, C03C 8/20, H01M 8/02, C04B 37/00, C03C 8/24, C04B 37/02, C03C 8/02, C03C 8/04, H01M 8/0282

(54) **Glasiges oder zumindest teilkristallines Fügematerial und dessen Verwendung**
Vitreous or at least partially crystalline material for jointing and its use
Matériau d'assemblage vitreux ou au moins partiellement cristallin et son utilisation

(30) Priorität: 28.05.2013 DE 102013209970
(43) Veröffentlichungstag der Anmeldung: 24.12.2014
(73) Patentinhaber: Schott AG, 55122 Mainz (DE)
(72) Erfinder: Suffner, Dr. Jens, 84034 Landshut (DE)

(56) Entgegenhaltungen:
- DE-A1- 10 122 327
- DE-A1-102010 035 251
- US-A1- 2006 063 659

## Beschreibung

Die vorliegende Erfindung betrifft Fügematerialien auf Glasbasis, insbesondere amorphe und/oder zumindest teilkristallisierende Fügematerialien mit und ohne Füller, die i.A. auch Glaslote genannt werden und insbesondere für Hochtemperaturanwendungen geeignet sind, sowie deren Anwendungen.

Solche Fügematerialien werden üblicherweise zum Herstellen von Fügeverbindungen eingesetzt, um insbesondere keramische Bauteile miteinander oder mit Bauteilen aus Metall in elektrisch isolierender Weise zu verbinden. Bei der Entwicklung solcher Fügematerialien wird deren Zusammensetzung oftmals so gewählt, dass der thermische Ausdehnungskoeffizient in etwa dem der miteinander zu verbindenden Bauteile entspricht, um eine dauerhaft stabile Fügeverbindung zu erhalten. Gegenüber anderen Fügeverbindungen, beispielsweise solchen aus Kunststoff, haben solche auf Glasbasis den Vorteil, dass sie hermetisch dicht ausgeführt werden und höheren Temperaturen standhalten können.

Solche gattungsgemäßen Fügematerialien auf Glasbasis werden i.A. oftmals aus einem Glaspulver hergestellt, das beim Lötvorgang aufgeschmolzen wird und unter Wärmeeinwirkung die Fügeverbindung mit den zu verbindenden Bauteilen ergibt. Die Löttemperatur wird in der Regel etwa in Höhe der so genannten Halbkugeltemperatur des Glases gewählt oder kann üblicherweise um ± 20 K von dieser abweichen. Die Halbkugeltemperatur kann in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 zuordnen, wie entsprechender Fachliteratur entnommen werden kann. Wird ein kristallisationsfreies Fügematerial in Form eines Glaspulvers aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glaslot als Fügematerial, dass die Betriebstemperatur, welcher die Fügeverbindung dauerhaft ausgesetzt sein kann, nicht höher als die Löttemperatur sein darf. Tatsächlich muss die Betriebstemperatur bei vielen Anwendungen noch signifikant unter der Löttemperatur liegen, da die Viskosität des Glaslotes bei steigenden Temperaturen abnimmt und ein gewissermaßen fließfähiges Glas bei hohen Temperaturen und/oder Drücken aus der Fügeverbindung herausgepresst werden kann, so dass diese Ihren Dienst versagen kann. Aus diesem Grund müssen Fügematerialien auf Glasbasis, die für Hochtemperaturanwendungen geeignet sind, üblicherweise eine Löttemperatur bzw. Halbkugeltemperatur aufweisen, welche noch deutlich über der späteren Betriebstemperatur liegt und/oder sie müssen ausreichend kristallisieren, so dass durch die Kristallisation eine ausreichende Stabilität des Lotes während des Betriebs bei erhöhten Temperaturen gewährleistet ist.

Ein Einsatzgebiet solcher Fügematerialien sind z.B. Fügeverbindungen in Hochtemperaturbrennstoffzellen, welche z.B. als Energiequelle in Kraftfahrzeugen oder zur dezentralen Energieversorgung eingesetzt werden können. Ein wichtiger Brennstoffzellentyp ist beispielsweise die so genannten SOFC (solid oxide fuel cell), welche sehr hohe Betriebstemperaturen von bis zu etwa 1100 °C aufweisen kann. Die Fügeverbindung wird dabei üblicherweise zur Herstellung von Brennstoffzellen-Stacks, d.h. für die Verbindung mehrerer einzelner Brennstoffzellen zu einem Stack verwendet. Solche Brennstoffzellen sind bereits bekannt und werden kontinuierlich verbessert. Insbesondere geht der Trend in der aktuellen Brennstoffzellenentwicklung im allgemeinen zu geringeren Betriebstemperaturen. Einige Brennstoffzellen erreichen schon Betriebstemperaturen unter 800 °C, so dass eine Absenkung der Löttemperaturen möglich und aufgrund der dann geringen Temperaturbelastung der SOFC-Komponenten beim Lötprozess auch erwünscht ist.

Ein geeignetes Metall zur Herstellung von SOFCs, insbesondere von Interkonnektoren, sind z.B. chromhaltige Legierungen wie CFY (Chrom-Eisen-Yttrium, Cr5FeY), welches von der Firma Plansee als chrombasierte Legierung mit 5% Eisenanteil und kleinen Mengen Yttriumoxid vertrieben wird. Fügematerialien auf Glasbasis, die z.B. in SOFCs eingesetzt werden, müssen mit den dort verwendeten Materialien der Fügepartner kompatibel sein, also z.B. mit CFY.

In der DE 10 2009 038 812 A1 sind hochtemperaturbeständige kristallisierende Glaslote beschrieben, die bis zu 40 mol% BaO enthalten und nur sehr niedrigen Gehalte von 0-2 mol% CaO. Diese Materialien sind schwierig zu verarbeiten; zuverlässige Fügeverbindungen insbes. für SOFC-Anwendungen konnten mit ihnen nicht hergestellt werden.

Erdalkali-Alumosilikatgläser sind in der Patentschrift US 6,532,769 B1 beschrieben. Sie weisen aber einen ungünstig hohen Gehalt an BaO und Al₂O₃ auf, welches zur Bildung von polymorphen Celsian-Phasen führt.

In der DE 10 2011 080 352 A1 sind Lotgläser zur Verwendung bei hohen Temperaturen basierend auf Erdalkali-Alumosilikaten mit hohem CaO-Gehalt beschrieben. Aufgrund ihres sehr geringen Gehaltes an SiO₂ ist ihr Fließverhalten vor Kristallisation stark vermindert.

Die US 5,998,037 A beschreibt Porzellanemaille auf Basis von BaO, B₂O₃ und SiO₂ für elektronische Applikationen. Die beschriebenen Gläser enthalten allerdings kein CaO und besitzen bevorzugt einen kleinen SiO₂- und hohen B₂O₃-Gehalt. Zudem können sie noch weitere Oxide der Alkalimetalle, Fluor, Phosphoroxid aber auch polyvalente Oxide wie Co₃O₄ enthalten, die alle für die Beständigkeit des Glases z.B. unter Stack-relavanten Bedingungen einer SOFC (hohe Temperaturen sowie feuchte und reduzierende Gase) nachteilig sind.

In der US 6,124,224 A wird ein glaskeramisches Fügematerial zum Einsatz im Hochtemperaturbereich insbesondere zur Herstellung von hermetischen Verbindungen für Sensoren im Abgasbereich beschrieben. Die in dieser Schrift beschriebenen Gläser weisen relativ hohe Gehalte an Al₂O₃ auf, die aufgrund der möglichen Bildung von Monocelsianen und Cordierit über bei hohen Betriebstemperaturen und Betriebszeiten nachteilig sind.

Die DE 10 2009 011 182 A1 hat kristallisationsfähige Lotgläser zum Gegenstand, deren Gesamtgehalt von BaO und Erdalkalien recht hoch ist. Hohe Gehalte an Barium führen in Kombination mit Chrom in den üblicherweise verwendeten Edelstählen oder Chromlegierungen zur starken Bildung einer dehnungsfehlangepassten und anisotropen Bariumchromatphase an der Grenzfläche, was sich einer reduzierten Zyklenbeständigkeit äußert.

Die DE 101 22 327 A1 beschreibt Glaslote als Fügematerial für Hochtemperaturanwendungen, die einen thermischen Ausdehnungskoeffizienten von mehr als 8 ppm/K aufweisen sollen. Die darin beschriebenen Materialien enthalten SiO₂, CaO, BaO und Al₂O₃ und können auch PbO und B₂O₃ enthalten. Y₂O₃ und La₂O₃ sind mögliche Bestandteile, um die thermischen Ausdehnungskoeffizienten zu erhöhen.

Die US 2006/006359 A1 beschreibt Fügematerialien für SOFCs zum Gegenstand, welche SiO₂, BaO, B₂O₃, MgO, CaO, ZnO, ZrO₂ und Y₂O₃ enthalten.

In der DE 10 2010 035 251 A1 werden ebenfalls Glaslote auf Basis SiO₂, BaO und B₂O₃ beschrieben. Al₂O₃, MgO, CaO, SrO und TiO₂ können auch enthalten werden.

Vor diesem Hintergrund liegt der vorliegenden Erfindung die Aufgabe zugrunde, ein Fügematerial auf Glasbasis zur Verfügung zu stellen, welches für Hochtemperaturanwendungen, insbes. im Temperaturbereich von mehr als 800 °C geeignet ist, im Ausgangszustand aber über eine verbesserte Fließfähigkeit verfügt, so dass die Herstellung von Bauteilen enthaltend eine Fügeverbindung mit dem Fügematerial vereinfacht wird. Der Koeffizient der linearen thermischen Ausdehnung im Temperaturbereich von 20 °C bis 300 °C wird mit α₍₂₀₋₃₀₀₎ abgekürzt, der Wert soll mindestens 7·10⁻⁶ K⁻¹ bis 11·10⁻⁶ K⁻¹ betragen, so dass Fügeverbindungen mit Chromlegierungen sowie hoch chromhaltigen Stählen möglich sind.

Die Aufgabe wird gelöst durch die Fügematerialien gemäß den unabhängigen Ansprüchen. Bevorzugte Ausführungsformen ergeben sich aus den abhängigen Ansprüchen.

Alle im weiteren genannten Prozentangaben sind sofern nichts anderes gesagt wird Angaben in mol% auf Oxidbasis.

Erfindungsgemäß weisen die Fügematerialien auf Glasbasis, d.h. das glasige oder zumindest teilkristalline Fügematerial, einen linearen thermischen Ausdehnungskoeffizienten α₍₂₀₋₃₀₀₎ von mindestens 7·10⁻⁶ K⁻¹ auf. Vorteilhaft werden Bereiche von mindestens 8·10⁻⁶ K⁻¹ bis mindestens 10·10⁻⁶ K⁻¹ erreicht.

Das erfindungsgemäße Fügematerial enthält mehr als 30% bis zu 50% SiO₂ sowie 0,5% bis 15% B₂O₃ als Glasbildner. Andere Glasbildner wie As₂O₃, Sb₂O₃, V₂O₅, Bi₂O₅ und GeO₂ sind aufgrund ihrer Polyvalenz und/oder des hohen Rohstoffpreises höchstens in Spuren in den Fügematerialien enthalten. P₂O₅ ist aufgrund des negativen Einflusses auf die hydrolytische Beständigkeit ebenfalls nur in Spuren enthalten.

SiO₂ ist der bevorzugte Glasbildner, da er stabil bei hohen Temperaturen sowie reduzierenden Bedingungen ist. Um eine ausreichende Beständigkeit des Fügematerials bei hohen Temperaturen sicher zu stellen, müssen erfindungsgemäß mindestens mehr als 30% SiO₂ vorhanden sein. Bei mehr als 55% ist die Bildung von Cristobalit möglich, welches eine Phasenumwandlung bei Temperaturen zwischen 200 und 300 °C durchläuft. Die Phasenumwandlung äußert sich in einer Diskontinuität in der thermischen Ausdehnung, was zum Aufbau von Spannungen in der thermischen Zyklierung und daraus zu Undichtigkeiten im Bauteil führt.

In der erfindungsgemäßen Komposition ist B₂O₃ ein effektiver Flux, der im Fügematerial enthalten ist, um eine gute Schmelzbarkeit des Glases zu erreichen. Geringe Anteile an Boroxid haben einen positiven Einfluss auf die chemische Beständigkeit sowie das Kristallisationsverhalten der Silikatgläser. Da Boroxid bei hohen Temperaturen mit Wasserdampf zu flüchtigem B(OH)₃ reagieren kann, liegt der maximal zu verwendete Gehalt bei 15%.

Al₂O₃ ist in dem erfindungsgemäßen Fügematerial optional und höchstens bis zu der Obergrenze weniger als 1,7% enthalten. Al₂O₃ kann zur Steigerung der chemischen Beständigkeit sowie zur Steuerung des thermischen Ausdehnungskoeffizienten, der Viskosität und des Kristallisationsverhaltens dienen. Größere Mengen an Al₂O₃ haben jedoch den Nachteil, dass sie in Kombination mit anderen Glasbestandteilen Kristallphasen mit negativem Einfluss auf das Ausdehnungsverhalten der Glaskeramiken aufweisen. So kann bei zu hohen Gehalten an Al₂O₃ in Magnesium-Alumosilikatgläsern in unerwünschter Weise Kordierit (Mg₂Al₄Si₅O₁₈) mit einem sehr niedrigen thermischen Ausdehnungskoeffizienten von 1 ppm/K gebildet werden. In Barium- und Strontiumalumosilikatgläsern können sich bei zu hohen Gehalten an Al₂O₃ unerwünschte Celsianphasen (Ba-Si₂Al₂O₈) bilden. Diese können sowohl einen hohen thermischen Ausdehnungskoeffizienten von bis zu 12 ppm/K (Hexacelsian), aber auch einen sehr geringen thermischen Ausdehnungskoeffizienten von nur 3 ppm/K aufweisen.

Der erfindungsgemäße Anteil von BaO in dem Fügematerial beträgt 5% bis 30% und der von CaO beträgt 5% bis 40%. Es hat sich gezeigt, dass BaO und CaO am besten in Kombination eingesetzt werden, was sich durch die vorgeschriebenen Mindestgehalte dieser Komponenten manifestiert. Zusätzlich können optional noch bis zu 20% MgO verwendet werden. Über die Kombination der Erdalkalimetalloxide wird das Kristallisationsverhalten, der Viskositätsverlauf und der thermischen Ausdehnungskoeffizient des Glases sowie der kristallisierten Glaskeramik eingestellt.

Die Summe ∑ (MgO, CaO, BaO) des Gesamtgehalts von BaO, CaO und MgO beträgt bevorzugt 35% bis 45%. Bei höheren BaO- und niedrigen CaO-Gehalten im Fügematerial kann es zu exzessiven Reaktionen mit Chrombestandteilen von Fügepartnern kommen. Daher ist es erfindungsgemäß, den Anteil von BaO auf maximal 30%, vorteilhaft insbes. maximal 25 %, zu begrenzen. In Kombination mit CaO mit der Obergrenze von maximal 40 mol% ist minimal 5 mol% BaO als Zusatz im Glas zu empfehlen, um einen guten Fluss des Glases während des Aufschmelzens zu erzielen. Ein weiterer positiver Effekt der genannten Erdalkalimetalloxide ist, dass der dielektrische Verlust gesenkt werden kann. Ferner können durch die netzwerkwandelnden Erdalkalioxide die Schmelztemperaturen und die Glasübergangstemperatur verringert werden. Ihr Gehalt bewirkt ferner eine Erhöhung des thermischen Ausdehnungskoeffizienten und stellt damit eine einfache Möglichkeit dar, das Fügematerial an die zu verschmelzenden Bauteile anzupassen. Auf den Einsatz von SrO wird, abgesehen von Spurenanteilen, die durch das Bariumoxid eingebracht werden, allerdings vorteilhafterweise verzichtet. Das erfindungsgemäße Fügematerial ist frei von PbO.

Optional enthalten kann auch ZnO sein mit einem Gehalt von bis zu 5%.

Zusätzlich können optional noch weitere Metalloxide RO₂ ausgewählt aus der Gruppe ZrO₂, TiO₂ und/oder SnO₂ enthalten sein. Der Gesamtgehalt an RO₂ beträgt in Summe höchstens 5%. Diese Oxide können insbesondere als Keimbildner für die in bestimmten Ausführungsformen gewünschte Teilkristallisation wirken. Höhere Gehalte an RO₂ können zu einer vermehrten Kristallisation führen und dadurch das Fließen zu höheren Temperaturen verschieben.

Ebenso optional enthalten sind Alkalimetalloxide R₂O ausgewählt aus der Gruppe Li₂O und/oder Na₂O und/oder K₂O mit einem Gesamtgehalt von höchstens 2%. Aufgrund ihres negativen Einflusses auf den spezifischen Widerstand der Fügung sowie der Beschleunigung von Chromabdampfreaktionen sind Alkalimetalloxide R₂O auf den genannten Höchstgehalt zu begrenzen.

Cs₂O besitzt zwar eine geringere Mobilität im Glas im Vergleich zu den vorher genannten Alkalimetalloxiden, es ist aber aufgrund seines negativen Einflusses auf die chemische Beständigkeit auf Anteile < 5 mol% zu reduzieren.

Auch optional enthalten sein kann La₂O₃, wobei der Gehalt von La₂O₃ erfindungsgemäß limitiert ist auf weniger als 1%.

Weitere Metalloxide R₂O₃ ausgewählt aus der Gruppe Nd₂O₃ und/oder Pr₂O₃ sind selbstverständlich je nach Anwendung nicht ausgeschlossen. Der Gesamtgehalt von diesen als R₂O₃ benannten Komponenten sollte jedoch zusammen mit Y₂O₃ und La₂O₃ nicht 5% überschreiten.

Y₂O₃ und/oder La₂O₃ und/oder die genannten R₂O₃ sind in der Lage, das Kristallisationsverhalten des Fügematerials beim Lötvorgang zu steuern. Gleichzeitig können sie die Glasbildungstemperatur erhöhen. Je höher die Glasildungstemperatur T_{g} ist, umso höher ist auch die Anwendungstemperatur des Fügematerials.

Allerdings haben die Erfinder erkannt, dass La₂O₃ wie oben beschrieben in seinem Gehalt beschränkt sein sollte, da es mit ZrO₂ reagieren kann, das entweder der Glasphase und/oder in der Anwendung dem Elektrolyten entstammen kann. In diesem Fall kann sich eine separate Lanthanzirkonatphase bilden, welche z.B. unerwünschte thermische Ausdehnungskoeffizienten aufweist und somit den Fügeverbund, der mit dem Fügematerial herstellbar ist, schwächen würde.

Im Gegensatz dazu ist ein Gehalt von Y₂O₃ in der Lage, die unerwünschte Cordieritphase in einem zumindest teilkristallinen Fügematerial zu unterdrücken. La₂O₃ ist dazu nicht in der Lage.

Oxide von polyvalenten Übergangsmetallen wie Eisen, Kobalt und Molybdän werden nicht in Mengen, die über Spuren hinausgehen, zugesetzt.

Weitere Zusätze sind selbstverständlich möglich und ebenfalls von der Erfindung umfasst. Der Begriff glasiges oder zumindest teilkristallines Fügematerial umfasst im Sinne der Erfindung sowohl das amorphe Grundglas, welches z.B. als Lotglas vor dem Lötvorgang eingesetzt wird, als auch das aus dem Grundglas beim Fügevorgang entstehende Material, das als teilkristallines oder vollständig kristallisiertes Material vorliegen kann. Sozusagen ist das erfindungsgemäße Fügematerial auf Glasbasis in den entsprechenden angegebenen Zusammensetzungsbereichen ein kristallisationsfähiges Glaslot.

In einer bevorzugten Ausführungsform enthält das erfindungsgemäße Fügematerial 35% bis 50% SiO₂, 0,5% bis 15% B₂O₃, 0% bis weniger als 1,6% Al₂O₃, 5% bis 25% BaO, 9% bis 36% CaO, 0% bis 16% MgO, 0% bis 5% RO₂, insbes. 0% bis 5% oder 0% bis 4,5% ZrO₂, 0% bis weniger als 2% R₂O, 0,1% bis 4% Y₂O₃ und weniger als 0,2% La₂O₃.

Vorteilhafte Untergrenzen von B₂O₃ sind insbes. 3% und/oder 4% und/oder 5% und/oder 6% und vorteilhafte Obergrenzen von B₂O₃ sind insbes. 13% und/oder 14%. Eine vorteilhafte Obergrenze von Al₂O₃ ist 1,6% oder insbes. 1,5%. Vorteil-hafte Untergrenzen von BaO sind 6% und 7% und vorteilhafte Obergrenzen von BaO können insbes. auch 24% und/oder 23% sein. Sinnvolle Untergrenze von CaO kann insbes. auch 10% und sinnvolle Obergrenzen von CaO ebenso 36% und/oder 35% und/oder 34% sein. Sinnvolle Obergrenzen von MgO können insbes. auch 15% und/oder 14% sein.

Erfindungsgemäß ist die Untergrenze von Y₂O₃ von 0,1%, besonders vorteilhaft 0,5% und/oder 1%, insbes. mit einer Obergrenze von 4%. Wie bereits beschrieben ist der Gehalt von La₂O₃ begrenzt, daher ist auch eine sinnvolle Obergrenze für La₂O₃ ein Gehalt von weniger als 0,1%. Besonders vorteilhaft ist das Fügematerial bis auf höchstens Verunreinigungen frei von La₂O₃.

Alle genannten Unter- und Obergrenzen sind selbstverständlich beliebig miteinander kombinierbar. Wie für den Fachmann ersichtlich ist kann vorteilhafter Weise ein erfindungsgemäßes Fügematerial überwiegend nur die genannten Komponenten in den genannten Zusammensetzungsbereichen enthaten. Ebenso ist es möglich, dass ein erfindungsgemäßes Fügematerial nur aus den genannten Komponenten in den genannten Zusammensetzungsbereichen besteht.

In einer besonders bevorzugten Ausführungsform liegt das Fügematerial in einer zumindest teilkristallisierten Form vor und enthält innerhalb der zuvor beschriebenen Gehaltsangaben sowohl ZrO₂ als auch Y₂O₃ mit einem Gehalt von jeweils bis zu 5%, wobei ebenso ZrO₂:Y₂O₃-Mischkristalle in dem Fügematerial enthalten sind. Diese Mischkristalle werden durch vorhandene ZrO₂- und Y₂O₃-Bestandteile gebildet. Diese können der Zugabe bei der Herstellung des Fügematerials entstammen.

Die Erfinder haben festgestellt, dass die Anwesenheit dieser ZrO₂:Y₂O₃-Mischkristalle sogar dazu führen kann, dass die Stärke der Fügeverbindung verbessert wird.

In einer bevorzugten Ausführungsform wird das Fügematerial mit anorganischen Füllstoffen vermischt. Deren Anteil kann bis zu 30 Gew.% an der Gesamtmasse betragen. Es werden insbes. anorganische Füllstoffe ausgewählt aus der Gruppe Al₂O₃ und/oder stabilisiertes ZrO₂ und/oder MgO verwendet, die insbes. in Form von Partikeln und/oder Fasern vorliegen können. Mit den Füllstoffen kann v.a. die thermische Ausdehnung sowie die Festigkeit des Fügematerials eingestellt werden.

Das erfindungsgemäße Fügematerial kann insbes. nach dem Fügevorgang als amorphes Glas vorliegen, das keine kristallinen Bereiche beinhaltet, oder in zumindest teilkristallinem Zustand, in dem zumindest kristallisierte Bereiche vorzufinden sind. Dies umfasst selbstverständlich auch vollständig kristallisierte Fügematerialien.

In einer vorteilhaften Ausführungsform liegt das erfindungsgemäße Fügematerial nach dem Fügevorgang jedoch als teilweise kristallisierte Glaskeramik vor, bei welcher der der kristalline Anteil höchstens 50% bezogen auf das Gesamtgewicht beträgt.

Bei den zumindest teilkristallinen Fügematerialen entsteht bevorzugt CaSiO₃ (Wollastonit), CaMgSi₂O₆ (Diopsid) sowie BaCa₂Si₃O₉ (Walstromit) als Kristallphase. Eine Bildung von Tridymit kann durch die Zugabe von CaO vermieden werden.

Bei der teilkristallinen Ausführungsform wird die Zusammensetzung des erfindungsgemäßen Fügematerials bevorzugt so eingestellt, dass es langsam kristallisiert. Würde es bereits sehr stark kristallisieren, ist eine ausreichende Benetzung oft nicht gegeben. Insbesondere soll das Fügematerial beim Herstellen einer Fügeverbindung im allgemeinen in nicht kristallisierter oder teilkristallisierter Form in die Verbindungsstelle eingebracht werden können, da die für die Benetzung der zu verschmelzenden Bauteile benötigte Temperatur dann tiefer liegt.

Das erfindungsgemäße Fügematerial zeichnet sich dadurch aus, dass es über ein gutes Fließverhalten im Ausgangszustand und eine ausreichende insbes. über die Temperaturführung steuerbare Kristallisation in einem nachfolgenden Schritt verfügt, so dass die Fügeverbindung in Anwendungen bei hohen Temperaturen, insbesondere oberhalb von 800 °C, eingesetzt werden können. Das sehr gute Fließverhalten äußert sich einer sehr langsamen Kristallisation während des Fügeprozesses, d.h. es tritt in der DSC-Messung keine Kristallisation bzw. erst bei Temperaturen oberhalb der maximalen Fügetemperatur von 950 °C auf.

Das erfindungsgemäße Fügematerial kann auch aufgefasst werden als Vorprodukt und/oder Zwischenprodukt der damit herzustellenden Fügeverbindung. Die damit hergestellte Fügeverbindung ist daher ebenfalls Gegenstand der Erfindung. Das erfindungsgemäße Fügematerial eignet sich insbes. zum Herstellen von Fügeverbindungen mit Metallen und/oder Metalllegierungen und/oder Keramiken als Fügepartnern.

Eine bevorzugte erfindungsgemäße Fügeverbindung ist dementsprechend eine Fügeverbindung zwischen zwei Keramiken, die mittels einem erfindungsgemäßen Fügematerial miteinander verbunden sind oder eine Fügeverbindung zwischen zwei Metallen und/oder Metalllegierungen, die mittels einem erfindungsgemäßen Fügematerial miteinander verbunden sind oder eine Fügeverbindung zwischen einem Metall und/oder einer Metalllegierungen und einer Keramik, die mittels einem erfindungsgemäßen Fügematerial miteinander verbunden sind. Diese Elemente können auch mit weiteren Bauteilen kombiniert oder untereinander beliebig kombiniert werden.

Das erfindungsgemäße Fügematerial wird bevorzugt zum Herstellen von Fügeverbindungen mit stabilisiertem Zirkonoxid eingesetzt, bevorzugt mit Yttrium stabilisiertem Zirkonoxid, kurz YSZ (umfassend insbes. 3YSZ, 4YSZ und/oder 8YSZ), welche dem Fachmann bekannt sind.

Ebenso bevorzugt können Fügeverbindungen mit ferritischen Edelstählen (z.B. Crofer 22) oder Chromlegierungen (CFY, Cr5FeY) hergestellt werden, die häufig in SOFC zum Einsatz kommen. Ein Beispiel einer Anwendung in Brennstoffzellen ist das Verbinden von einzelnen SOFCs zu einem SOFC-Stack. Ebenso ist es möglich, Durchführungsöffnungen in Bauteilen insbes. aus den genannten Materialien, auch in Brennstoffzellen, mit dem erfindungsgemäßen Fügematerial abzudichten.

Daher umfasst die Erfindung auch die Verwendung des erfindungsgemäßen Fügematerials zur Herstellung von Fügeverbindungen und/oder Durchführungen, insbes. in Brennstoffzellen, v.a. Hochtemperaturbrennstoffzellen, Elektrolysezellen, Sensoren und/oder Zündkerzen.

Beispiele solcher Sensoren finden sich in Verbrennungsaggregaten, beispielsweise Automobilanwendungen, Schiffsmotoren, Kraftwerken, Flugzeugen oder in der Raumfahrttechnik. Eine vorteilhafte Anwendung ist die Verwendung des erfindungsgemäßen Fügematerials in Sensoren im Abgasstrang und/oder der Brennkammer von Fahrzeugen oder anderen Geräten mit Verbrennungsmotoren oder anderen Geräten einschließlich Gerätezonen, die hohen Temperaturen ausgesetzt sind.

Eine weitere bevorzugte Verwendung des erfindungsgemäßen Fügematerials ist die Herstellung von Sinterkörpern mit hoher Temperaturbeständigkeit. Herstellungsverfahren von Sinterkörpern sind hinlänglich bekannt. Im allgemeinen wird dabei das Ausgangsmaterial des erfindungsgemäßen Fügematerials in Pulverform miteinander vermischt, mit einem im allgemeinen organischen Binder vermengt und in die gewünschte Form gepresst. Statt der Pulver der Ausgangsmaterialien kann auch ein bereits aufgeschmolzenes erfindungsgemäßes Glas vermahlen und mit dem Binder vermischt werden. Der gepresste Glas-Binder-Körper wird daraufhin auf Sintertemperatur gebracht, wobei der Binder ausbrennen kann und die Glaskomponenten bei der Sintertemperatur zusammensintern können. Der so erhaltene Sinterkörper kann daraufhin in Kontakt mit den zu verbindenden Bauteilen gebracht werden und durch einen Lötvorgang diese verbinden und/oder mit diesen verbunden werden.

Die Verwendung von Sinterkörpern beim Verlöten hat den Vorteil, dass der Sinterkörper ein Formbauteil ist und in nahezu beliebige Geometrien gebracht werden kann. Eine beispielsweise häufig verwendete Form ist ein Hohlzylinder, der zusammen mit einem elektrischen Kontaktstift in Durchführungsöffnungen von Metallbauteilen eingebracht werden kann, um durch die Verlötung eine vorzugsweise hermetisch dichte Glas-Metall-Durchführung mit einem elektrisch isolierten Kontaktstift zu erhalten. Solche Glas-Metall-Durchführungen werden in vielen elektrischen Bauteilen eingesetzt und sind dem Fachmann bekannt.

Eine weitere bevorzugte Anwendung des erfindungsgemäßen Fügematerials ist die Herstellung von Folien, die das Fügematerial beinhalten. Solche Folien sind ähnlich dem zuvor beschriebenen Sinterkörper, können aber weitgehend flexibel ausgeführt sein. Aus ihnen können Formen ausgestanzt und auf vorteilhafte Weise dazu verwendet werden, um flächige Bauteile miteinander zu verbinden.

Die Verwendung als Zuschlagsstoff in anderen Gläsern und/oder Glaskeramiken ist ebenso möglich.

Das erfindungsgemäße Fügematerial wird im allgemeinen hergestellt, indem die Inhaltsstoffe in einer konventionellen Glasschmelze zu einem Glas geschmolzen werden und dieses anschließend zu einem Pulver gemahlen wird. Das Pulver kann z.B. in Form einer dispensfähigen Paste oder eines vorgesinterten Formkörpers in die Fügeverbindung eingebracht werden.

Optimale Festigkeiten einer Fügeverbindung werden erreicht, wenn das Fügematerial in der thermischen Ausdehnung optimal an die zu verbindenden Materialien angepasst ist. Ferner dürfen auch durch eine Änderung des thermischen Ausdehnungskoeffizienten durch den Kristallisationsprozess keine zu großen Spannungen in dem Fügematerial entstehen. Das erfindungsgemäße Fügematerial stellt dies unter anderem durch die Vermeidung von unerwünschten Kristallphasen sicher.

Die Erfindung wird im Folgenden anhand der Eigenschaften erfindungsgemäßer Fügematerialien sowie anhand eines Vergleichsbeispiels näher beschrieben.

Zuerst wurde das Fügematerial in einer Glasschmelze erschmolzen. Die Komposition von 11 Beispielen mit der Bezeichnung Nr. 1 bis Nr. 11 sind in der folgenden Tabelle 1 wiedergegeben, ebenso wesentliche physikalische Eigenschaften. Die letzte Spalte mit der Bezeichnung Vgl.Bsp. gibt die Komposition eines Vergleichsbeispiels an, das nicht zur Erfindung gehört. Alle Angaben sind wie bereits beschrieben in mol% auf Oxidbasis.

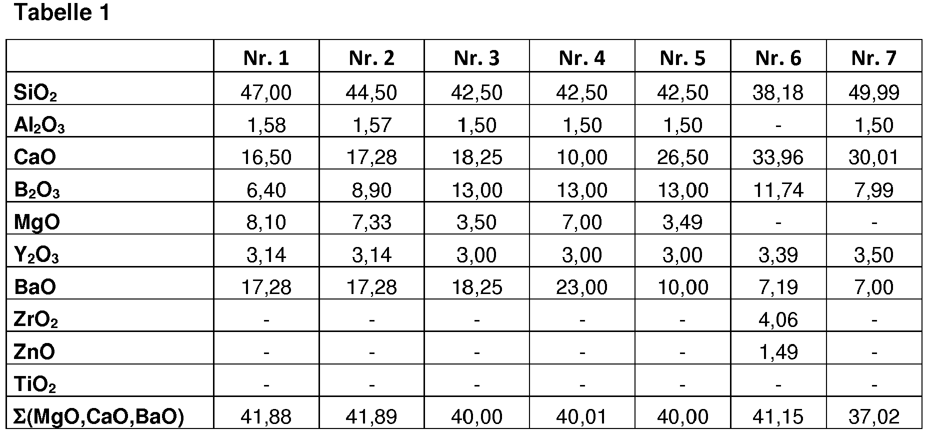

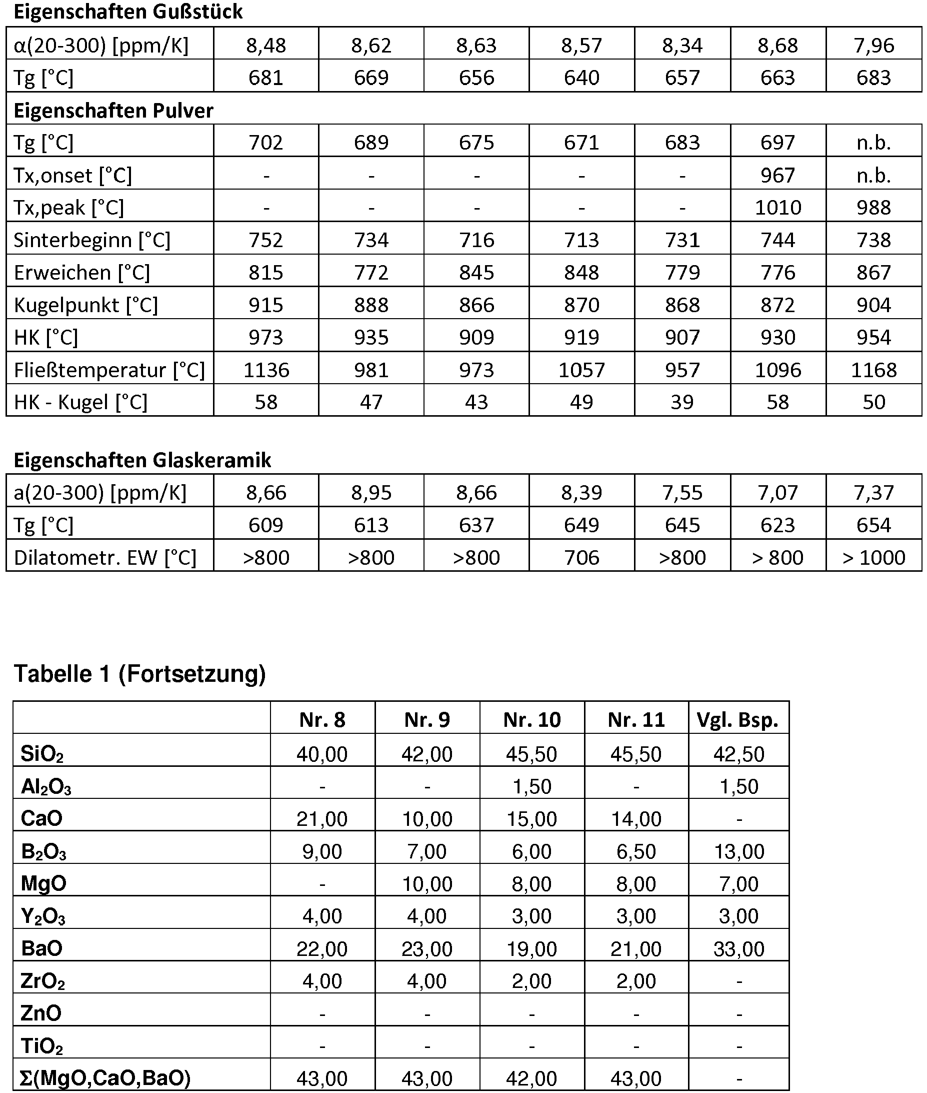

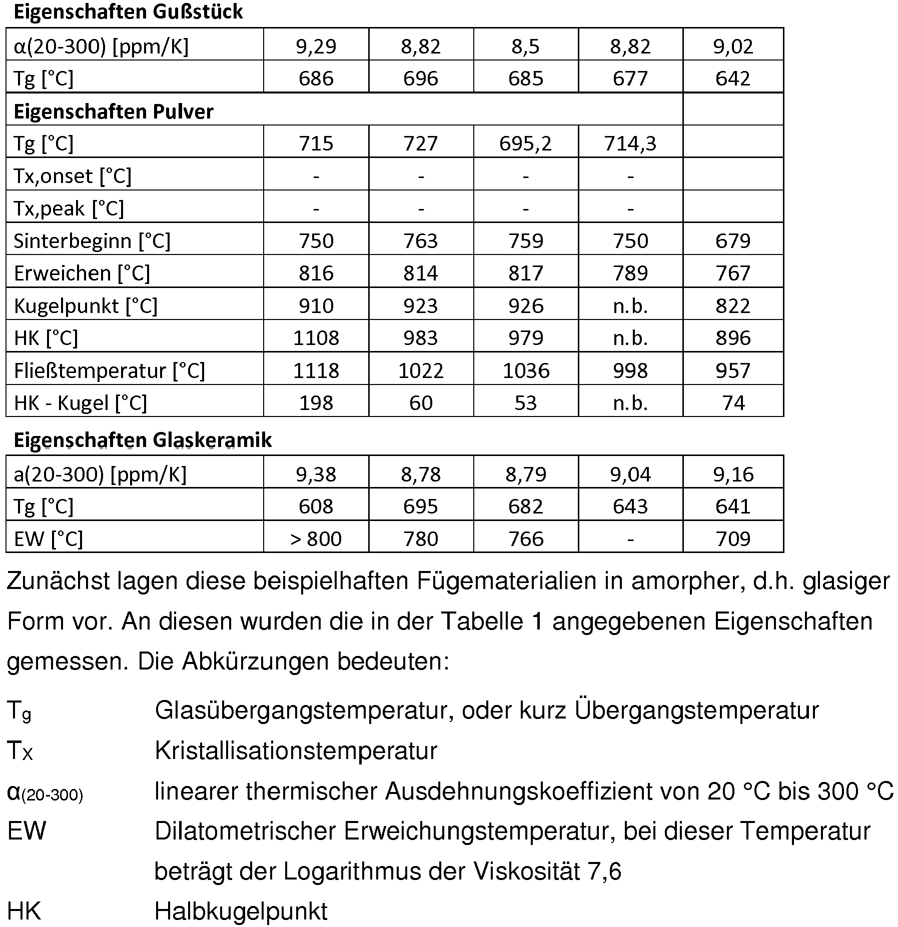

Die übrigen verwendeten Begriffe sind üblich und dem Fachmann bekannt. Die Glasübergangstemperatur (T_{g}) und der thermische Ausdehnungskoeffizient zwischen 20 und 300°C (α₍₂₀₋₃₀₀₎) wurden bestimmt über Dilatometrie am Gußblock; Kristallisationstemperatur Tₓ bestimmt mittels DSC am Pulver; Sinterbeginn, Erweichungstemperatur, Kugelpunkt, Halbkugelpunkt und Fließtemperatur bestimmt mittels Erhitzungsmikroskopie am Pulverpressling. Da es sich um Standardmethoden handelt, sind die Vorgehensweisen dem Fachmann bekannt.

Anschließend wurden die Beispiele der amorphen Fügematerialien durch Temperaturbehandlung zumindest teilkristallisiert. Da viele hochschmelzende Bestandteile aus der Glasmatrix herauskristallisieren, verschiebt sich der T_{g} zu leicht kleineren Temperaturen. Durch die Kristallisation sind die Gläser aber sehr gut fügbar und anschließend gut für den Betrieb bei Temperaturen von mehr als 800 °C geeignet.

Aus dem Fügematerial nach Beispiel Nr.1 wurde mit einem acrylatbasierten Binder und einem organischem Lösemittel eine Paste erstellt, die auf die Randbereiche zweier unbeschichteter CFY-Platten aufgebracht wurde. Die Platten wurden aufeinandergelegt und bei einer Fügetemperatur von 950 °C gefügt. Die Proben wiesen nach der Fügung eine He-Dichtigkeit von 10⁻⁸ bis 10⁻⁹ mbar · | · s⁻¹ auf. Nach Auslagerung dieser Proben bei 850 °C für 500 h und 1000 h konnte keine Änderung der Dichtigkeit erkannt werden. Dieses Fügematerial eignet sich demnach sehr gut zum Fügen mit CFY.

Die Durchführung dieses Tests mit dem Fügematerial mit dem Vergleichsbeispiel unterstreicht die Vorteile der Erfindung. Vergleichend wurde aus dem Fügematerial entsprechend dem Vergleichsbeispiel mit einem acrylatbasierten Binder und einem organischem Lösemittel eine Paste erstellt, die auf die Randbereiche zweier unbeschichteter CFY-Platten aufgebracht wurde. Das Fügematerial des Vergleichsbeispiels besitzt einen hohen BaO-Gehalt und eine Zusammensetzung, die außerhalb des Anspruchsbereichs liegt. Die Platten wurden aufeinandergelegt und bei 900 °C gefügt. Im Kontaktbereich zwischen dem Glas und dem Metall zeigte sich eine deutliche Grünverfärbungen aufgrund von massiver Chromauflösung und starke Blasenbildung. Es konnte keine dichte Probe hergestellt werden. Damit ist dieses Glas für die Fügung ungeeignet.

Als anderes Anwendungsbeispiel wurden aus dem Fügematerial nach Beispiel Nr.1 kleine Zylinder mit einem Durchmesser von 2 mm gepresst und bei 950 °C mit CFY verschmolzen. Die Schmelzknöpfe wiesen sehr gute Haftung auf dem Substrat auf. Zum Ablösen der Proben wurde eine sehr hohe mittlere Kraft von 12,7 kg benötigt.

Auch hier belegt die Durchführung dieses Tests mit dem Fügematerial des Vergleichsbeispiels, dass das erfindungsgemäße Fügematerial demjenigen des Vergleichsbeispiels überlegen ist. Aus dem Fügematerial des Vergleichsbeispiels wurden kleine Zylinder mit einem Durchmesser von 2mm gepresst und bei 900 °C mit CFY verschmolzen. Die Schmelzknöpfe wiesen keine Haftung auf dem Substrat auf.

Das erfindungsgemäße Fügematerial lässt sich mit konventionellen Schmelzverfahren mit gutem Einschmelzverhalten und nicht zu hohen Schmelztemperaturen herstellen. Es weist thermische Ausdehnung in dem angestrebten Bereich auf sowie insbesondere eine nach Bedarf zu steuernde Kristallisationsneigung. Durch die Zusammensetzung wird die Bildung von unerwünschten Kristallphasen wirkungsvoll unterbunden, was dauerhaft stabile spannungsarme Fügeverbindungen ermöglicht. Aufgrund ihrer Armut an Alkalimetallen verfügen die erfindungsgemäßen Glaslote über hervorragende elektrische Isolationseigenschaften auch bei hohen Temperaturen.

Ferner ermöglicht die gute Benetzung insbes. der Interkonnektormaterialien in Brennstoffzellen eine rationelle Herstellung von Fügeverbindungen in Brennstoffzellenstacks. Das sehr gute Fließverhalten äußert sich einer sehr langsamen Kristallisation während des Fügeprozesses, d.h. es tritt in der DSC-Messung keine Kristallisation bzw. erst bei Temperaturen oberhalb der maximalen Fügetemperatur von 950 °C auf.

Das erfindungsgemäße Fügematerial ermöglicht insbes. vorteilhaft die Herstellung von Fügeverbindungen mit ferritischen Edelstählen (z.B. Crofer 22) und/oder chromhaltigen Legierungen (z.B. CFY und/oder Cr5FeY) und/oder keramischen Fügepartnern wie stabilisiertem Zirkonoxid und/oder Aluminiumoxid.

## Patentansprüche

1. Glasiges oder zumindest teilkristallines Fügematerial mit einem thermischen Ausdehnungskoeffizienten α₍₂₀₋₃₀₀₎ von ≥ 7·10⁻⁶ K⁻¹ bis 11·10⁻⁶ K⁻¹, enthaltend (in mol% auf Oxidbasis)
| | |
|---|---|
| SiO₂ | > 30 - 55 |
| B₂O₃ | 0,5 - 15 |
| Al₂O₃ | 0 - < 1,7 |
| BaO | 5 - 30 |
| CaO | 5 - 40 |
| MgO | 0 - 20 |
| ZnO | 0 - 5 |
| Cs₂O | 0 - <5 |
| RO₂ | 0 - 5 |
| R₂O | 0 - 2 |
| La₂O₃ | < 1 |
| Y₂O₃ | 0,1 - 5 |
wobei RO₂ ein Metalloxid und/oder eine Mischung aus Metalloxiden ist ausgewählt aus der Gruppe ZrO₂ und/oder TiO₂ und/oder SnO₂ und R₂O ein Alkalimetalloxid und/oder eine Mischung aus Alkalimetalloxiden ausgewählt aus der Gruppe Li₂O und/oder Na₂O und/oder K₂O ist und wobei das Fügematerial frei ist von PbO und wobei Oxide von polyvalenten Übergangsmetallen wie Eisen, Kobalt und Molybdän nicht in Mengen vorhanden sind, die über Spuren hinausgehen.

2. Fügematerial nach Anspruch 1, enthaltend (in mol% auf Oxidbasis)
| | |
|---|---|
| SiO₂ | 35 - 50 |
| B₂O₃ | 0,5 - 15 |
| Al₂O₃ | 0 - <1,6 |
| BaO | 5 - 25 |
| CaO | 9 - 36 |
| MgO | 0 - 16 |
| RO₂ | 0 - 5 |
| R₂O | 0 - <2 |
| Y₂O₃ | 0,1 - 4 |
| La₂O₃ | <0,2 |

3. Fügematerial nach mindestens einem der vorhergehenden Ansprüche, wobei gilt (in mol% auf Oxidbasis)
| | |
|---|---|
| ∑(MgO, CaO, BaO) | 35 - 45 |

4. Zumindest teilkristallines Fügematerial nach mindestens einem der vorhergehenden Ansprüche, wobei gilt (in mol% auf Oxidbasis)
| | |
|---|---|
| ZrO₂ | >0 - 5 |
| Y₂O₃ | 0,1 - 5 |
und das ZrO₂:Y₂O₃-Mischkristalle enthält.

5. Fügematerial nach mindestens einem der vorhergehenden Ansprüche, enthaltend zusätzlich bis zu 30 Gew.% anorganische Füllstoffe, insbesondere anorganische Füllstoffe ausgewählt aus der Gruppe Al₂O₃ und/oder stabilisiertes ZrO₂ und/oder MgO, die insbesondere in Form von Partikeln oder Fasern vorliegen.

6. Fügematerial nach mindestens einem der vorhergehenden Ansprüche, das in einem amorphen oder zumindest in einem teilkristallisierten Zustand vorliegt.

7. Fügeverbindung, beinhaltend zumindest
- zwei Elemente aus Keramik, die mittels einem Fügematerial nach mindestens einem der vorhergehenden Ansprüche verbunden sind, oder
- zwei Elemente aus Metall und/oder Metalllegierungen, die mittels einem Fügematerial nach mindestens einem der vorhergehenden Ansprüche verbunden sind, oder
- ein Element aus einem Metall und/oder einer Metalllegierung und ein Element aus einer Keramik, die mittels einem Fügematerial nach mindestens einem der vorhergehenden Ansprüchen verbunden sind.

8. Verwendung eines Fügematerials nach mindestens einem der Ansprüche 1 bis 6 zur Herstellung von Fügeverbindungen und/oder Durchführungen, insbesondere in Brennstoffzellen, Elektrolysezellen, Sensoren und/oder Zündkerzen.

9. Verwendung eines Fügematerials nach mindestens einem der Ansprüche 1 bis 6 zum Fügen von ferritischen Edelstählen und/oder chromhaltigen Legierungen, bevorzugt CFY, und/oder zum Fügen von Keramiken, bevorzugt stabilisiertem Zirkonoxid und/oder Aluminiumoxid.

10. Verwendung eines Fügematerials nach mindestens einem der Ansprüche 1 bis 6 zur Herstellung von Sinterkörpern und/oder Grünfolien und/oder als Zuschlagsmaterial in Gläsern und/oder Glaskeramiken.

## Claims

1. Vitreous or at least partially crystalline joining material which has a coefficient of thermal expansion α₍₂₀₋₃₀₀₎ of ≥ 7·10⁻⁶ K⁻¹ to 11·10⁻⁶ K⁻¹ and contains (in mol% on an oxide basis)
| | |
|---|---|
| SiO₂ | > 30 - 55 |
| B₂O₃ | 0.5 - 15 |
| Al₂O₃ | 0 - < 1.7 |
| BaO | 5 - 30 |
| CaO | 5 - 40 |
| MgO | 0 - 20 |
| ZnO | 0 - 5 |
| Cs₂O | 0 - < 5 |
| RO₂ | 0 - 5 |
| R₂O | 0 - 2 |
| La₂O₃ | < 1 |
| Y₂O₃ | 0.1- 5, |
where RO₂ is a metal oxide and/or a mixture of metal oxides selected from the group consisting of ZrO₂ and/or TiO₂ and/or SnO₂, and R₂O is an alkali metal oxide and/or a mixture of alkali metal oxides selected from the group consisting of Li₂O and/or Na₂O and/or K₂O and where the joining material is free of PbO and where oxides of polyvalent transition metals such as iron, cobalt and molybdenum are not present in quantities going beyond traces.

2. Joining material according to Claim 1, containing (in mol% on an oxide basis)
| | |
|---|---|
| SiO₂ | 35 - 50 |
| B₂O₃ | 0.5 - 15 |
| Al₂O₃ | 0 - < 1.6 |
| BaO | 5 - 25 |
| CaO | 9 - 36 |
| MgO | 0 - 16 |
| RO₂ | 0 - 5 |
| R₂O | 0 - < 2 |
| Y₂O₃ | 0.1 - 4 |
| La₂O₃ | < 0.2. |

3. Joining material according to at least one of the preceding claims, where (in mol% on an oxide basis)
| | |
|---|---|
| ∑(MgO, CaO, BaO) | 35 - 45. |

4. At least partially crystalline joining material according to at least one of the preceding claims, where (in mol% on an oxide basis)
| | |
|---|---|
| ZrO₂ | > 0 - 5 |
| Y₂O₃ | 0.1 - 5, |
and which contains ZrO₂:Y₂O₃ solid solutions.

5. Joining material according to at least one of the preceding claims, additionally containing up to 30% by weight inorganic fillers, in particular inorganic fillers selected from the group consisting of Al₂O₃ and/or stabilized ZrO₂ and/or MgO, which are present in particular in the form of particles or fibres.

6. Joining material according to at least one of the preceding claims, present in an amorphous or at least in a partially crystallized state.

7. Joint connection, comprising at least
- two elements made of ceramic, which are joined by means of a joining material according to at least one of the preceding claims, or
- two elements made of metal and/or metal alloys, which are joined by means of a joining material according to at least one of the preceding claims, or
- one element made of a metal and/or a metal alloy and one element made of a ceramic, which are joined by means of a joining material according to at least one of the preceding claims.

8. Use of a joining material according to at least one of Claims 1 to 6 for producing joint connections and/or feedthroughs, in particular in fuel cells, electrolysis cells, sensors and/or spark plugs.

9. Use of a joining material according to at least one of Claims 1 to 6 for joining ferritic high-grade steels and/or chromium-containing alloys, preferably CFY, and/or for joining ceramics, preferably stabilized zirconium oxide and/or aluminium oxide.

10. Use of a joining material according to at least one of Claims 1 to 6 for producing sintered bodies and/or green sheets and/or as additive in glasses and/or glass ceramics.

## Revendications

1. Matériau d'assemblage vitreux ou au moins partiellement cristallin ayant un coefficient d'expansion thermique α₍₂₀₋₃₀₀₎ de ≥ 7·10⁻⁶ K⁻¹ à 11·10⁻⁶ K⁻¹, contenant (en % en moles en termes d'oxydes) :
| | |
|---|---|
| SiO₂ | > 30 à 55, |
| B₂O₃ | 0,5 à 15, |
| Al₂O₃ | 0 à < 1,7, |
| BaO | 5 à 30, |
| CaO | 5 à 40, |
| MgO | 0 à 20, |
| ZnO | 0 à 5, |
| Cs₂O | 0 à < 5, |
| RO₂ | 0 à 5, |
| R₂O | 0 à 2, |
| La₂O₃ | < 1, |
| Y₂O₃ | 0,1 à 5, |
RO₂ étant un oxyde métallique et/ou un mélange d'oxydes métalliques choisis dans le groupe constitué par ZrO₂ et/ou TiO₂ et/ou SnO₂, et R₂O étant un oxyde de métal alcalin et/ou un mélange d'oxydes de métaux alcalins choisis dans le groupe constitué par Li₂O et/ou Na₂O et/ou K₂O, et le matériau d'assemblage étant exempt de PbO, et des oxydes de métaux de transition polyvalents tels que le fer, le cobalt et le molybdène n'étant pas présents en quantités dépassant les traces.

2. Matériau d'assemblage selon la revendication 1, contenant (en % en moles en termes d'oxydes) :
| | |
|---|---|
| SiO₂ | 35 à 50, |
| B₂O₃ | 0,5 à 15, |
| Al₂O₃ | 0 à < 1,6, |
| BaO | 5 à 25, |
| CaO | 9 à 36, |
| MgO | 0 à 16, |
| RO₂ | 0 à 5, |
| R₂O | 0 à < 2, |
| Y₂O₃ | 0,1 à 4, |
| La₂O₃ | < 0,2. |

3. Matériau d'assemblage selon au moins l'une quelconque des revendications précédentes, dans lequel (en % en moles en termes d'oxydes) :
| | |
|---|---|
| ∑(MgO, CaO, BaO) | 35 à 45. |

4. Matériau d'assemblage au moins partiellement cristallin selon au moins l'une quelconque des revendications précédentes, dans lequel (en % en moles en termes d'oxydes) :
| | |
|---|---|
| ZrO₂ | > 0 à 5, |
| Y₂O₃ | 0,1 à 5, |
et qui contient des cristaux mixtes ZrO₂:Y₂O₃.

5. Matériau d'assemblage selon au moins l'une quelconque des revendications précédentes, contenant en outre jusqu'à 30 % en poids de charges inorganiques, notamment de charges inorganiques choisies dans le groupe constitué par Al₂O₃ et/ou ZrO₂ stabilisé et/ou MgO, qui se présentent notamment sous la forme de particules ou de fibres.

6. Matériau d'assemblage selon au moins l'une quelconque des revendications précédentes, qui se présente à un état amorphe ou au moins à un état partiellement cristallisé.

7. Liaison d'assemblage, contenant au moins :
- deux éléments en céramique, qui sont reliés au moyen d'un matériau d'assemblage selon au moins l'une quelconque des revendications précédentes, ou
- deux éléments en métal et/ou alliages de métaux, qui sont reliés au moyen d'un matériau d'assemblage selon au moins l'une quelconque des revendications précédentes, ou
- un élément en un métal et/ou un alliage de métaux et un élément en une céramique, qui sont reliés au moyen d'un matériau d'assemblage selon au moins l'une quelconque des revendications précédentes.

8. Utilisation d'un matériau d'assemblage selon au moins l'une quelconque des revendications 1 à 6 pour la fabrication de liaisons d'assemblage et/ou de passages, notamment dans des piles à combustible, des cellules d'électrolyse, des capteurs et/ou des bougies d'allumage.

9. Utilisation d'un matériau d'assemblage selon au moins l'une quelconque des revendications 1 à 6 pour l'assemblage d'aciers inoxydables ferritiques et/ou d'alliages contenant du chrome, de préférence CFY, et/ou pour l'assemblage de céramiques, de préférence d'oxyde de zirconium stabilisé et/ou d'oxyde d'aluminium.

10. Utilisation d'un matériau d'assemblage selon au moins l'une quelconque des revendications 1 à 6 pour la fabrication de corps frittés et/ou de feuilles crues et/ou en tant que matériau additif dans des verres et/ou des vitrocéramiques.
